Europäisches Patentamt

European Patent Office

Office européen des brevets

(11) Veröffentlichungsnummer: **0 157 174**
**B1**

# EUROPÄISCHE PATENTSCHRIFT

(45) Veröffentlichungstag der Patentschrift:
28.12.88

(21) Anmeldenummer: **85102190.7**

(22) Anmeldetag: **27.02.85**

(51) Int. Cl.⁴: **G 09 B 21/00,** G 09 B 21/02

(54) **Blindenschrift-Lesegerät.**

(30) Priorität: **30.03.84 AT 1093/84**

(43) Veröffentlichungstag der Anmeldung:
**09.10.85 Patentblatt 85/41**

(45) Bekanntmachung des Hinweises auf die Patenterteilung:
**28.12.88 Patentblatt 88/52**

(84) Benannte Vertragsstaaten:
**AT BE CH DE FR GB IT LI NL SE**

(56) Entgegenhaltungen:
**EP-A- 0 123 205**
**US-A- 3 736 672**

**IBM TECHNICAL DISCLOSURE BULLETIN, Band 18, Nr. 7, Dezember 1975, Seiten 2294-2295, New York, US; E.G. NASSIMBENE: "Ball and belt loop braille line display"**
**XEROX DISCLOSURE BULLETIN, Band 1, Nr. 5, mai 1976, Seiten 3-4, Stamford, US; G. WADA: "Braille points duplication method"**

(73) Patentinhaber: **Siemens Aktiengesellschaft Berlin und München, Wittelsbacherplatz 2, D-8000 München 2 (DE)**

(72) Erfinder: **Zagler, Wolfgang, Dipl.-Ing., Bennoplatz 4/2, A-1080 Wien (AT)**
Erfinder: **Oberleitner, Wolfgang, Dipl.-Ing., Wimbergergasse 43, A-1070 Wien (AT)**

## Beschreibung

Die Erfindung bezieht sich auf ein Blindenschrift-Ausgabegerät mit einem flächenhaften Darstellungsträger mit erhabenen Rastpunkten, die von selektiv durch Öffnungen in der Oberfläche des Darstellungsträgers hindurchragende Kugelkalotten gebildet werden, wobei der Aufzeichnungsträger aus einem eine geschlossene Schleife bildenden über zwei um parallele Achsen rotierende Walzen umlaufenden Band aus flexiblem Material besteht, bei dem die für die Kugelkalotten vorgesehenen Öffnungen an der Schleifen-Aussenseite des Bandes angeordnet sind, das im oberen, die Lesezone bildenden Teil der Schleife über eine Auflageplatte und im unteren Teil der Schleife durch einen Stahlkugel-Behälter geführt ist, und wobei der Aufzeichnungsträger mit einer senkrecht zur Bewegungsrichtung des Bandes angeordneten, elektromagnetisch betätigten Auswahlvorrichtung versehen ist.

Es sind elektromagnetisch betätigbare Ausgabegeräte für Blindenschrift bekannt, die mit einem Tableau versehen sind, das ein Lochraster mit der Grundstruktur der Blindenschriftzeichen aufweist. In diesen Löchern befinden sich Stifte, die einzeln mittels Elektromagnete nach oben bewegt werden können, derart, dass die nach aussen ragenden Stifte in ihrer Gesamtheit die Blindenschriftzeichen repräsentieren. Bei einer dieser bekannten Ausführungen sind die nach aussen ragenden Enden der Stifte als Kugelkalotten ausgebildet. Alle diese bekannten Ausführungen von Lesegeräten dienen der Präsentation eines Textes in einem Umfang, der durch die Grösse des Darstellungsfeldes bestimmt ist. Wenn mit Hilfe solcher Geräte ein längerer Text in tastbarer Form dargestellt werden soll, muss dieser in Abschnitte entsprechend der Grösse des Aufzeichnungsfeldes unterteilt, abgespeichert und dieser Speicherinhalt in elektrische Signale umgesetzt werden.

Aus der Entgegenhaltung IBM Technical Disclosure Bulletin, Band 18, Nr. 7, Dezember 1975, Seiten 2294–2295 ist ein Blindenschrift-Ausgabegerät mit einem flächenhaften Darstellungsträger mit erhabenen Rastpunkten bekannt, die von selektiv durch Öffnungen in der Oberfläche des Aufzeichnungsträgers hindurchragende Kugelkalotten gebildet werden. Der Aufzeichnungsträger besteht aus einem eine geschlossene Schleife bildenden über zwei um parallele Achsen rotierende Walzen umlaufenden Band aus flexiblem Material, bei dem die für die Kugeln vorgesehenen Öffnungen im Band angeordnet sind. Das Band ist im oberen, die Lesezone bildenden Teil der Schleife über eine Auflageplatte und im unteren Teil der Schleife durch einen Stahlkugel-Behälter geführt. Ausserdem ist das Blindenschrift-Ausgabegerät mit einer senkrecht zur Bewegungsrichtung des Bandes angeordneten elektromagnetisch betätigten Auswahlvorrichtung versehen. Nachteilig bei diesem Blindenschrift-Ausgabegerät ist, dass die Kugeln, die nicht zur Darstellung der Information benötigt werden, den Kugeln, die von der Auswahlvorrichtung angezogen werden, entgegen fallen. Dadurch können sich die Kugeln anstauen und verkanten, wodurch das Band zum Halten gebracht wird.

Die Erfindung hat sich die Aufgabe gestellt, ein Blindenschrift-Ausgabegerät zu schaffen, das eine ununterbrochene Benützung ermöglicht.

Diese Aufgabe wird erfindungsgemäss dadurch gelöst, dass die Öffnungen an der Schleifen-Innenseite zu Ausnehmungen für je eine zum Teil durch die Öffnung ragende Stahlkugel erweitert sind, dass im unteren Teil der Schleife alle Ausnehmungen mit je einer Stahlkugel besetzt werden und dass die elektromagnetisch betätigte Auswahlvorrichtung an der Übergangsstelle des Bandes zur Auflageplatte angeordnet ist, die die zur Darstellung der Information auf dem Band dienenden Stahlkugeln während des Überganges über einen Ausscheidungsschacht festhält, während die von der Auswahlvorrichtung freigegebenen Stahlkugeln durch den Ausscheidungsschacht in den Stahlkugel-Behälter zurückfallen.

Das erfindungsgemässe Ausgabegerät lässt sich auch zum Kopieren der eingeschriebenen Schriftzeichen verwenden, wenn gemäss einem weiteren Merkmal der Erfindung am Ende der Auflageplatte eine federnd gegen das Band gedrückte Walze aus elastischem Material vorgesehen ist, mit deren Hilfe die Schriftzeichen in Folien aus verformbarem Material, insbesondere Papier, einprägbar sind.

Ein Ausführungsbeispiel der Erfindung ist in der Zeichnung dargestellt.

Fig. 1 zeigt ein Blindenschrift-Ausgabegerät im Längsschnitt und in

Fig. 2 ist ein Detail vergrössert dargestellt.

Das Ausgabegerät ist von einem wannenförmigen Gehäuse 1 umschlossen, in dem zwei Walzen 2 und 3 mit horizontalen Achsen gelagert sind. Um diese ist ein als Darstellungsträger dienendes, zu einer endlosen Schleife zusammengeschlossenes Band 4 aus flexiblem Material gelegt. Im oberen Teil der Schleife gleitet das Band 4 über eine zur Verbesserung des Andruckes ggf. gekrümmte Auflageplatte 5 und der auf der Auflageplatte 5 liegende Teil des Bandes 4 kann vom Lesenden abgetastet werden, wobei die Zeilen quer zur Bewegungsrichtung des Bandes verlaufen.

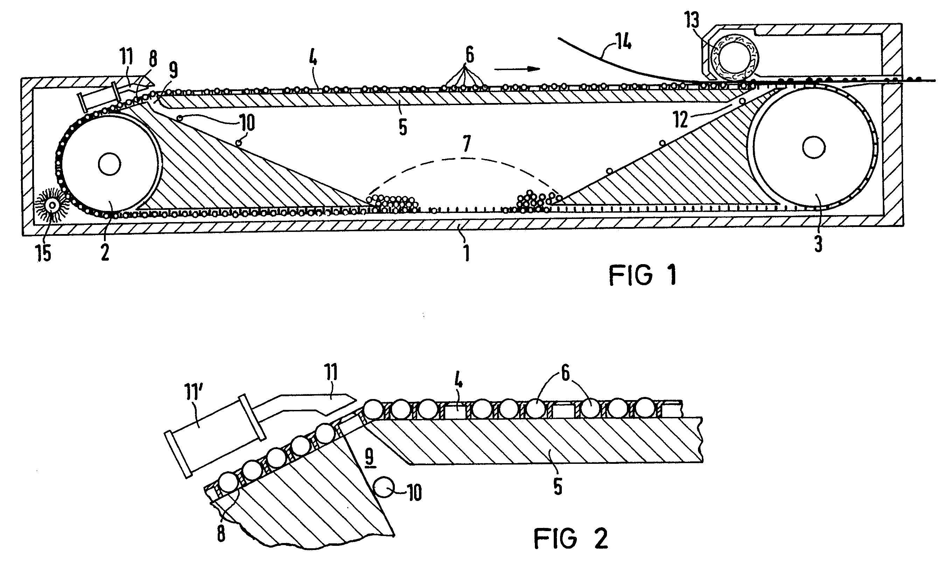

Die Struktur des Bandes 4 ist der Fig. 2 zu entnehmen, in der ein Teil desselben in einem gegenüber der Darstellung in Fig. 1 vergrösserten Massstab gezeichnet ist. Das aus einem elastischen Kunststoff gefertigte Band 4 ist mit Ausnehmungen versehen, die im Raster der Blindenschriftzeichen über die ganze Oberfläche des Bandes 4 verteilt angeordnet sind. Diese Ausnehmungen dienen zur Aufnahme je einer Stahlkugel 6 mit dem Durchmesser von etwa 2 mm. Die Ausnehmungen sind an der Aussenseite der vom Band 4 gebildeten Schleife soweit verengt, dass von den in den Ausnehmungen befindlichen Kugeln 6 jeweils nur eine Kalotte herausragt, die vom Lesenden als Rasterpunkt erkannt wird. Zwecks besserer Haltbarkeit des Bandes 4 kann dieses zusätzlich mit einer Metallfolie überzogen sein, die in gleicher Weise wie das Band 4 selbst mit Öffnungen für die Kugelkalotten versehen ist.

Wenn die Walzen 2 und/oder 3 angetrieben werden, fördern sie das Band 4 in der durch den Pfeil angegebenen Richtung über die Auflageplatte 5. Bei der Rückführbewegung im unteren Teil der Schleife wird das Band 4 durch einen mit Stahlkugeln 6 gefüllten Stahlkugel-Behälter 7 geführt, in dem alle Ausnehmungen des Bandes 4 mit je einer Stahlkugel 6 besetzt werden. Hierbei können Abstreifkanten oder Führungsleisten, die in der Zeichnung nicht näher dargestellt sind, dazu verwendet werden, dass jede Ausnehmung mit Sicherheit mit einer Stahlkugel besetzt wird. Demgemäss weisen die Ausnehmungen an der Innenseite der vom Band 4 gebildeten Schleife einen solchen Durchmesser auf, dass die Stahlkugeln 6 mit Leichtigkeit in die Ausnehmungen fallen. Das mit Stahlkugeln 6 gefüllte Band 4 wird von der Walze 2 nach oben transportiert, wobei es nach dem Abheben von der Walze 2 von einer Auflagefläche 8 unterstützt wird, die das Herausfallen der Stahlkugeln 6 aus den nunmehr nach unten offenen Ausnehmungen verhindert.

Zwischen der Auflagefläche 8 und der Auflageplatte 5 ist quer zur Bewegungsrichtung des Bandes 4 ein Ausscheidungsschacht 9 vorgesehen, durch den die für die Bildung der Schriftinformation auf dem Band 4 nicht benötigten Stahlkugeln 10 aus dem Band 4 herausfallen und in den Stahlkugel-Behälter 7 zurückrollen. Zur Auswahl der für die Aufzeichnung der Schriftinformation benötigten Stahlkugeln dient eine oberhalb des Ausscheidungsschachtes 9 angeordnete Auswahlvorrichtung, die im einzelnen aus quer zur Bewegungsrichtung des Bandes 4 angeordneten und je einer Reihe von Stahlkugeln 6 zugeordneten Elektromagneten 11 und deren Erregerspulen 11' besteht. Der Ausscheidungsschacht 9 hat am oberen Ende die Breite einer Stahlkugel, so dass beim Darübergleiten des Bandes 4 ohne zusätzliche Massnahme alle Stahlkugeln in den Ausscheidungsschacht 9 fallen würden. Um zu verhindern, dass die für die Darstellung der jeweiligen Schriftzeichen erforderlichen Stahlkugeln herausfallen, werden diese Stahlkugeln, während sie über den Ausscheidungsschacht 9 geführt werden, von den ihren Reihen zugeordneten Elektromagneten 11 innerhalb der Ausnehmungen des Bandes 4 so lange festgehalten, bis sie im Zuge der Weiterbewegung auf die Auflageplatte 5 zu liegen kommen, wo sie gegen Herausfallen aus den Ausnehmungen des Bandes 4 gesichert sind. Anstelle eines einzigen Ausscheidungsschachtes 9 können auch mehrere einzelne, quer zum Band 4 angeordnete Schächte vorgesehen werden, beispielsweise für jede Reihe der auszuwählenden Stahlkugeln ein eigener Schacht. Die für die Steuerung der Elektromagneten 11 erforderlichen Sensoren, die die jeweilige Lage des Bandes 4 der elektronischen Steuereinrichtung für die Setzung der Schriftzeichen zu übermitteln ist in der Zeichnung nicht enthalten.

Am Ende der Auflageplatte 5 befindet sich eventuell ein weiterer Schacht 12 für die Entleerung aller im Band 4 befindlichen Ausnehmungen von den verbliebenen Stahlkugeln, die von dort aus ebenfalls in den Stahlkugel-Behälter 7 zurückrollen. Dadurch gelangt das von der Walze 3 umgelenkte Band 4 gänzlich entleert in den Stahlkugel-Behälter 7 und wird dort neuerlich in allen Ausnehmungen mit je einer Stahlkugel 6 besetzt.

Das erfindungsgemässe Ausgabegerät eignet sich auch zum Kopieren der eingeschriebenen Schriftzeichen. Hierzu ist am Ende der Lesezone oberhalb der Auflageplatte 5 eine aus elastischem Material bestehende Walze 13 vorgesehen, die für diesen Anwendungszweck gegen das Band 4 gedrückt wird. Wenn zwischen dem Band 4 und der Walze 13 ein Papierblatt 14 oder eine Folie aus verformbarem Material eingelegt wird, prägen sich dort die Schriftzeichen ein.

Verschmutzungen des Bandes 4 und der Stahlkugeln 6 können durch eine eingebaute Reinigungsvorrichtung 15, vorzugsweise eine feste oder rotierende Bürste, gegebenenfalls durch Zugabe von Reinigungsmitteln, entfernt werden.

**Patentansprüche**

1. Blindenschrift-Ausgabegerät mit einem flächenhaften Darstellungsträger mit erhabenen Rastpunkten, die von selektiv durch Öffnungen in der Oberfläche des Aufzeichnungsträgers hindurch ragende Kugelkalotten gebildet werden, wobei der Aufzeichnungsträger aus einem eine geschlossene Schleife bildenden über zwei um parallele Achsen rotierende Walzen (2, 3) umlaufenden Band (4) aus flexiblem Material besteht, bei dem die für die Kugelkalotten vorgesehenen Öffnungen an der Schleifen-Aussenseite des Bandes angeordnet sind, das im oberen, die Lesezone bildenden Teil der Schleife über eine Auflageplatte (5) und im unteren Teil der Schleife durch einen Stahlkugel-Behälter (7) geführt ist, und wobei der Aufzeichnungsträger mit einer senkrecht zur Bewegungsrichtung des Bandes (4) angeordneten, elektromagnetisch betätigten Auswahlvorrichtung (11) versehen ist, dadurch gekennzeichnet, dass die Öffnungen an der Schleifen-Innenseite zu Ausnehmungen für je eine zum Teil durch die Öffnung ragende Stahlkugel (6) erweitert sind, dass im unteren Teil der Schleife alle Ausnehmungen mit je einer Stahlkugel (6) besetzt werden und dass die elektromagnetisch betätigte Auswahlvorrichtung (11) an der Übergangsstelle des Bandes (4) zur Auflageplatte (5) angeordnet ist, die die zur Darstellung der Information auf dem Band (4) dienenden Stahlkugeln (6) während des Überganges über einen Ausscheidungsschacht (9) festhält, während die von der Auswahlvorrichtung (11) freigegebenen Stahlkugeln (10) durch den Ausscheidungsschacht (9) in den Stahlkugel-Behälter (7) zurückfallen.

2. Blindenschrift-Ausgabegerät nach Anspruch 1, dadurch gekennzeichnet, dass am Ende der Auflageplatte (5) eine federnd gegen das Band (4) gedrückte Walze (13) aus elastischem Material vorgesehen ist, mit deren Hilfe die Schriftzeichen in Folien (14) aus verformbarem Material, insbesondere Papier einprägbar sind.

**Claims**

1. Braille output device with a laminar representation carrier with raised scanning points formed by spherical segments projecting selectively through openings in the surface of the record carrier, the record carrier consisting of a strip (4) of flexible material forming a closed loop and circulating round two rollers (2, 3) rotating around parallel axes, the openings provided for the spherical segments being arranged on the outside of the loop of the strip which is guided in the upper part of the loop, constituting the reading zone, over a supporting plate (5) and in the lower part of the loop through a steel ball container (7), and the record carrier being provided with an electromagnetically operable selection device (11) arranged perpendicularly to the direction of movement of the strip (4), characterised in that the openings on the inside of the loop are extended to form recesses for one steel ball (6) alone projecting partially through the opening, in that in the lower part of the loop all the recesses are filled with one steel ball (6) alone and in that the electromagnetically operable selection device (11) is arranged at the place where the strip (4) passes on to the supporting plate (5) and secures the steel balls (6) serving to represent the information on the strip (4) during the passage over a removal chute (9), while the steel balls (10) released by the selection device (11) drop back through the removal chute (9) into the steel ball container (7).

2. Braille output device according to claim 1, characterised in that at the end of the supporting plate (5) there is provided a roller (13) made of elastic material which is pressed flexibly against the trip (4), by means of which the characters may be imprinted in films (14) made of deformable material, particularly paper.

**Revendications**

1. Appareil de sortie délivrant une sortie imprimée en braille, possédant un support de représentation présentant une certaine étendue et comportant des points d'accrochage saillants qui sont formés par des calottes sphériques s'engageant de façon sélective à travers des ouvertures ménagées dans la surface du support d'enregistrement, et dans lequel le support d'enregistrement est constitué par une bande (4) qui est réalisée en un matériau flexible, forme une boucle fermée et circule sur deux cylindres (2, 3) tournant autour d'axes parallèles et dans lequel les ouvertures prévues pour les calottes sphériques sont ménagées sur la face extérieure de la boucle formée par la bande qui est guidée sur une plaque d'appui (5) dans la partie supérieure de la boucle, constituant la zone de lecture, et traverse un récipient (7) contenant des billes d'acier, dans la partie inférieure de la boucle, et dans lequel le support d'enregistrement comporte un dispositif de sélection (11) disposé perpendiculairement à la direction de déplacement de la bande (4) et actionné par voie électromagnétique, caractérisé par le fait que les ouvertures situées sur la face intérieure de la boucle sont élargies de manière à former des évidements pour des billes d'acier respectives (6) pénétrant partiellement dans les ouvertures, que, dans la partie inférieure de la boucle, tous les évidements sont occupés par des billes d'acier respectives (6) et qu'au niveau du point où la bande (4) atteint la plaque d'appui (5), se trouve disposé le dispositif de sélection (11) actionné par voie électromagnétique, qui retient les billes d'acier (6) servant à représenter l'information sur la bande (4), pendant leur passage au-dessus d'une goulotte d'évacuation (9), tandis que les billes d'acier (10) libérées par le dispositif de sélection (11) retombent par l'intermédiaire de la goulotte d'évacuation (9) dans le récipient (7) contenant les billes d'acier.

2. Appareil de sortie servant à réaliser une sortie imprimée en braille selon la revendication 1, caractérisé par le fait qu'il est prévu, à l'extrémité de la plaque d'appui (5), un cylindre (13), qui est réalisé en un matériau élastique et est comprimé élastiquement contre la bande (4) et à l'aide duquel les caractères peuvent être imprimés dans des feuilles (14) réalisées en un matériau déformable, notamment du papier.

FIG 1

FIG 2

EP 0 157 174 B1